# EUROPÄISCHE PATENTSCHRIFT

(11) **EP 1 982 159 B1**
(45) Veröffentlichungstag und Bekanntmachung des Hinweises auf die Patenterteilung: **29.08.2012**
(21) Anmeldenummer: 07721888.1
(22) Anmeldetag: 02.02.2007
(51) Int. Cl.: G01N 15/02, G01N 21/31, G01N 21/51, G01N 21/57, G01N 21/53

(54) **MESSVORRICHTUNG ZUR BESTIMMUNG DER GRÖSSE, GRÖSSENVERTEILUNG UND MENGE VON PARTIKELN IM NANOSKOPISCHEN BEREICH**
MEASURING DEVICE FOR DETERMINING THE SIZE SIZE DISTRIBUTION AND AMOUNT OF PARTICLES IN THE NANOSCOPIC RANGE
DISPOSITIF DE MESURE DESTINÉ À DÉTERMINER LA DIMENSION, LA RÉPARTITION DIMENSIONNELLE ET LA QUANTITÉ DE PARTICULES À L'ÉCHELLE NANOSCOPIQUE

(30) Priorität: 06.02.2006 DE 102006005574
(43) Veröffentlichungstag der Anmeldung: 22.10.2008
(73) Patentinhaber: Johann Wolfgang Goethe-Universität Frankfurt am Main, 60325 Frankfurt am Main (DE)
(72) Erfinder: MÄNTELE, Werner, 83088 Kiefersfelden (DE); VOGEL,Vitali, 60437 Frankfurt (DE); KLEIN, Oliver, 61381 Friedrichsdorf (DE); SCHRÖDER, Lea, 65719 Hofheim (DE)
(74) Vertreter: Metten, Karl-Heinz
(86) Internationale Anmeldenummer: PCT/DE2007/000218
(87) Internationale Veröffentlichungsnummer: WO 2007/090378

(56) Entgegenhaltungen:
- WO-A-01/20304
- WO-A-03/062800
- WO-A-2004/051205
- US-A- 5 808 738
- US-A1- 2001 052 975
- MIGNANI ET AL: "Spectral nephelometry for the geographic classification of Italian extra virgin olive oils" SENSORS AND ACTUATORS B, ELSEVIER SEQUOIA S.A., LAUSANNE, CH, Bd. 111-112, 11. November 2005 (2005-11-11), Seiten 363-369, XP005088364 ISSN: 0925-4005
- MIGNANI A G ET AL: "Scattered colorimetry and multivariate data processing as an objective tool for liquid mapping" PROC SPIE INT SOC OPT ENG; PROCEEDINGS OF SPIE - THE INTERNATIONAL SOCIETY FOR OPTICAL ENGINEERING; 17TH INTERNATIONAL CONFERENCE ON OPTICAL FIBRE SENSORS, OFS-17 2005, Bd. 5855 PART I, 2005, Seiten 38-41, XP002446529
- CUMMING A M ET AL: "IN-VITRO NEUTRALIZATION OF HEPARIN IN PLASMA PRIOR TO THE ACTIVATED PARTIAL THROMBOPLASTIN TIME TEST AN ASSESSMENT OF FOUR HEPARIN ANTAGONISTS AND TWO ANION EXCHANGE RESINS" THROMBOSIS RESEARCH, Bd. 41, Nr. 1, 1986, Seiten 43-56, XP002446530 ISSN: 0049-3848

## Beschreibung

Die vorliegende Erfindung betrifft ein Verfahren zur Bestimmung von Heparin in insbesondere heparinisierten Blut- oder Blutserumproben mittels Streulicht.

Optische Methoden zur Bestimmung der Größe von Partikeln werden bereits vielfältigst eingesetzt. Die Lichtstreuung nimmt unter diesen Methoden keinen geringen Raum ein. Hierbei macht man sich die Erkenntnisse der Rayleigh-, Mie-, Debye-, Rayleigh-Gans- und Fraunhofer-Streutheorien zu nutze. Während die Rayleigh-Streutheorie nur für Partikelgrößen kleiner etwa 1/10 der Wellenlänge des einfallenden Lichts anwendbar ist und nur ein einziges Streuungszentrum unterstellt, ist die Mie-Streutheorie auf Partikelgrößen im Bereich der 0,1- bis 10-fachen Meßwellenlänge anwendbar. Die Mie-Streutheorie ist jedoch sehr komplex und erfordert leistungsfähige Computer. Die Debye-Rayleigh-Gans- und Fraunhofer-Streutheorien gehen hingegen von vereinfachten Annahmen aus und sind demgemäß weniger komplex, jedoch zumeist nur für die Bestimmung größerer Partikel geeignet.

In MIGNANI ET AL: "Spectral nephelometry for the geographic classification of Italian extra virgin olive oils" SENSORS AND ACTUATORS B, ELSEVIER SEQUOIA S.A., CH, Bd. 111-112, 11. November 2005, Seiten 363-369 wird eine Messung von Streuspektren verschiedener Proben von Olivenöl mit vier alternierend betriebenen breitbandigen Lichtquellen unter verschiedenen Winkeln zur Verbindungsachse von Probe und Detektor offenbart. Die erhaltenen Daten werden mit Hilfe einer Methode der multivariaten Statistik so ausgewertet, dass Olivenöle nach ihrer Herkunft gruppiert und unterschieden werden können.

In MIGNANI A G ET AL: "Scattered colorimetry and multivariate data processing as an objective tool for liquid mapping" PROC SPIE INT SOC OPT ENG; PROCEEDINGS OF SPIE - THE INTERNATIONAL SOCIETY FOR OPTICAL ENGINEERING; 17TH INTERNATIONAL CONFERENCE ON OPTICAL FIBRE SENSORS, OFS-17 2005, Bd. 5855 PART I, 2005, Seiten 38-41 wird eine Messung von Streuspektren verschiedener Proben von Flüssigkeiten wie z. B. Olivenöle oder Frittieröle mit vier alternierend betriebenen breitbandigen Lichtquellen unter verschiedenen Winkeln zur Verbindungsachse von Probe und Detektor offenbart. Die erhaltenen Daten werden mit Hilfe einer Methode der multivariaten Statistik so ausgewertet, dass ein Parameterraum mit statistisch unabhängigen Koordinaten erhalten wird, die nach Ihrer Signifikanz sortiert sind. Dies ermöglicht eine gegenseitige Klassifizierung der untersuchten Flüssigkeiten.

Die US 5 808 738 A offenbart ein optisches Messsystem zur Charakterisierung von Makromolekülen in einer Lösung. Dabei wird die Probe von einer breitbandigen Lichtquelle beleuchtet und die von der Probe gestreute Strahlung unter verschiedenen Winkeln zum einfallenden Strahl sowie die absorbierte Strahlung spektral untersucht. Diese Daten werden verwendet, um die physikalischen Eigenschaften der Makromoleküle zu bestimmen.

Die WO 01/20304 A2 offenbart ein optisches Messsystem zur Charakterisierung verunreinigter Oberflächen, bei der der für die Messung benötigte freie optische Pfad durch die permanente Strömung einer Reinigungsflüssigkeit gesäubert wird. Dabei können verschiedene Messmethoden wie z. B. Interferometrie, Ellipsometrie und Reflektometrie integriert werden.

Die WO 03/062800 A2 offenbart ein tragbares Gerät zur Bestimmung der Reflexionseigenschaften von Oberflächen. Dabei wird die zu untersuchende Oberfläche unter verschiedenen Einfallswinkeln und in verschiedenen Wellenlängenbereichen optisch abgetastet. Aus den erhaltenen Messwerten werden charakteristische Reflexionseigenschaften der Oberfläche bestimmt.

Die US 2001/0052975 A1 offenbart eine Messmethode zur Erkennung von Unregelmäßigkeiten auf Oberflächen, bei der die Streuung eines senkrecht einfallenden Lichstrahls und die Absorption eines streifend einfallenden Lichtstrahls ausgewertet wird. Dabei können sich die Wellenlängen der beiden Strahlen zu einer besseren Trennung der Ergebnisse unterscheiden.

Der Vergleich beider Signale ermöglicht dabei eine Unterscheidung von abgelagerten Partikeln und Substratfehlem.

Gemäß einer ersten Ausführungsfonn bekannter Meßvorrichtungen zur Bestimmung der Größe von Partikeln im nanoskopischen Bereich mittels Lichtstreuung wird auf eine Lichtquelle monochromatischen Lichts, d.h. Laserlichts, und eine Vielzahl an Detektoren, die in unterschiedlichen Winkel zum zu vermessenden Probenkörper angebracht sind, zurückgegriffen. Eine derartige Vorrichtung findet sich z.B. in der DE 696 00 969 T2 beschrieben. Hierbei kommt ein Verbundlaser-Beugungsinstrument zum Einsatz, mit dem individuelle Streusignale gezielt generiert werden können. Das in diesem Dokument beschriebene Verfahren erlaubt die Messung von Partikelgrößenverteilungen über Lichtstreuung.

In ähnlicher Weise sind der DE 197 24 228 A1 Partikelgrößenverteilungen und Konzentrationen von Partikel mit Hilfe elektrisch modulierter Lichtquellen durch Detektion der gestreuten Strahlung unter verschiedenen Streuwinkeln bestimmbar. Für eine feststehende individuelle Wellenlänge wird der Streuwinkel sukzessive durch Rotation eines Spiegels eingestellt und der jeweilige Streulichtanteil detektiert.

Gemäß einer zweiten Ausführungsform bekannter Meßvorrichtungen zur Bestimmung von Partikelgrößen bzw. Partikelgrößenverteilungen mit Hilfe einer Lichtquelle monochromatischen Lichts bedient man sich nicht einzelner lagefixiert angeordneter Detektoren, sondern eines Feldes einer Vielzahl an Detektoren. Beispielsweise wird gemäß der in der DE 195 10 034 A1 offenbarten Meßvorrichtung ein an einer dispersen Partikelprobe gestreuter Laserstrahl über ein in der Brennebene der Abbildungseinrichtung angeordnetes Feld von Fotodetektoren abgebildet und einer Auswertemeßvorrichtung zugeführt. Die gefundene Meßvorrichtung soll eine möglichst kompakte und optisch stabile Bauweise erlauben. Ferner soll der Durchmesser des Meßstrahls variabel den Erfordernissen des jeweiligen Meßbereichs angepaßt werden können, so daß sich auch ausgedehnte Partikelkollektive bis herab zu feinsten Partikeln hinsichtlich ihrer Größenverteilung bestimmen lassen.

Eine dritte Ausführungsform bekannter Meßvorrichtungen zur Bestimmung der Partikelgröße bzw. Partikelgrößenverteilung mittels Lichtstreuung ist der US 6,137,572 zu entnehmen, bei der mittels der dynamischen Lichtstreuung, welche die Dopplerverbreiterung des gestreuten Lichts gegenüber dem schmalbandig eingestrahlten Laserlicht nutzt, die Empfindlichkeit für die Bestimmung der Partikelgröße noch einmal beträchtlich erhöht wird.

Schließlich können Partikelgrößen bzw. Partikeldichten gemäß einer weiteren Ausführungsform einer aus dem Stand der Technik bekannten Meßvorrichtung auch im Wege von Interferenzmessungen, wie z.B. aus der DE 199 54 702 A 1 und DE 195 25 847 A 1 bekannt, ermittelt werden. Bei den in diesen Dokumenten beschriebenen Verfahren wird ein Interferenzbild mit kohärentem Licht eines Lasers erzeugt, woraufhin sich aus dem erhaltenen Interferenzmuster die gewünschten Angaben zur Partikeldichte und -größe abschätzen lassen. So ist beispielsweise die Vorrichtung gemäß der DE 195 25 847 A1 mit einer Ablenkeinheit auszustatten, die eine Richtungsänderung des beleuchtenden Laserstrahls in der Weise zuläßt, daß dieser Laserstrahl während der Messung in einen Winkelbereich um das zu vermessende Teilchen geführt wird.

Die bislang zur Partikelgrößenbestimmung bzw. zur Bestimmung der Partikelgrößenverteilungen eingesetzten optischen Verfahren sind apparativ aufwendig und gestatten zudem nicht oder nicht ohne weiteres zeitaufgelöste Messungen.

Es wäre daher wünschenswert, auf Meßvorrichtungen zur Bestimmung der Größe von Partikeln im nanoskopischen Bereich mittels Streustrahlung zurückgreifen zu können, die nicht mit den Nachteilen des Standes der Technik behaftet sind.

Daher lag der vorliegenden Erfindung die Aufgabe zugrunde, ein Verfahren mit einer Meßvorrichtung zur Bestimmung der Größe und der Größenverteilung von Partikeln im nanoskopischen Bereich mittels Streustrahlung, insbesondere Lichtstreuung, zur Verfügung zu stellen, die auf einfache und gleichwohl zuverlässige Weise eine unabhängige Bestimmung der Teilchendichte und der Teilchengröße zuläßt, um somit den Heparinanteil in insbesondere heparinisierten Blut- oder Blutserumproben schnell und zuverlässig ermitteln zu können.

Demgemäß wurde eine Meßvorrichtung zur Bestimmung der Größe, Größenverteilung und/oder Konzentration von nanoskopischen Partikeln oder Hohlräumen in einer Meßprobe, des Trübungsgrades solcher Meßproben über die Bestimmung der wellenlängen- und streuwinkelabhängigen Intensitäten von an einer Meßprobe gestreuten Meßstrahlung gefunden, umfassend eine Aufnahmevorrichtung für eine zu vermessende Meßprobe, einen Detektor, umfassend mindestens einen Detektoreinlaß, eine Auswerteeinheit und mindestens zwei jeweils beabstandet voneinander und beabstandet von der Meßprobe vorliegende Strahlungsquellen, die ein Mehrwellenlängenspektrum oder ein kontinuierliches Spektrum aufweisen und deren Strahlungsintensitäten einstellbar und/oder bestimmbar sind, wobei über die Strahlungsquellen jeweils ein Strahlenbündel an im wesentlichen parallelen Strahlen in Richtung auf eine Meßprobe emittierbar ist und wobei die auf die Meßprobe richtbaren Strahlenbündel unterschiedlicher Strahlungsquellen, bezogen auf die Achse zwischen dem Detektoreinlaß und der Meßprobe, in unterschiedlichen Winkeln auf die Meßprobe ausgerichtet oder ausrichtbar sind. Hierbei können im wesentlichen parallele Strahlen die Strahlungsquelle beispielsweise direkt verlassen oder, falls die Strahlungsquelle nicht unmittelbar parallele Strahlen erzeugt, können solche parallelen Strahlen auch mit geeigneten nachgeschalteten Hilfsmitteln, z.B. Linsen, d.h. indirekt, erhalten werden. Die mindestens zwei jeweils beabstandet voneinander und beabstandet von der Meßprobe vorliegenden Strahlungsquellen sind vorzugsweise lagefixiert. Hierbei wird im allgemeinen die Strahlungsquelle während der Messung in ihrer Lage relativ zu einer benachbarten Strahlungsquelle bzw. zu benachbarten Strahlungsquellen sowie zu der Meßprobe nicht verändert.

Die im erfindungsgemäßen Verfahren eingesetzte Meßvorrichtung eignet sich insbesondere dazu, auf einfache und zuverlässige Weise die Größe, Größenverteilung und/oder Konzentration bzw. Dichte von Partikel im nanoskopischem Bereich, die in einer Meßprobe vorliegen, zu ermitteln. Die diese nanoskopischen Partikel enthaltende Meßprobe kann dabei viskos, flüssig oder gasförmig sein. Viskose Meßproben umfassen u.a. auch solche mit halbfester oder pastöser Konsistenz. Beispielhaft sei hierfür auf Cremes sowie (Zahn)-Pasten verwiesen. Ferner kommen als Meßproben auch feste nicht-transparente Probenkörper mit mindestens einer mittels Streustrahlung, insbesondere gestreuter Lichtstrahlung, vermessbaren Oberfläche und feste transparente bzw. lichtdurchlässige Probenkörper enthaltend nanoskopische Partikel oder Hohlräume in Betracht. Letztgenannte Probenkörper können z.B. Glasproben, enthaltend Einschlüsse in Form von nanoskopischen Partikeln oder Hohlräumen, darstellen. Als Hohlräume kommen z.B. blasenförmige Einschlüsse, beispielsweise Lufteinschlüsse, in Betracht. Auf diese Weise kann z.B. die Güte von Glaskörpern wie Linsen geprüft werden. Als Aufnahmevorrichtung für eine nanoskopische Partikel enthaltende viskose, flüssige oder gasförmige Meßprobe kann z.B. auf Meßküvetten oder auf Durchflußzellen zurückgegriffen werden. Die im erfindungsgemäßen Verfahren eingesetzte Meßvorrichtung eignet sich folgerichtig für den diskontinuierlichen wie auch für den kontinuierlichen Betrieb.

In einer besonders bevorzugten Ausführungsform sind mindestens eine Strahlungsquelle, insbesondere sämtliche Strahlungsquellen der Meßvorrichtung, die Aufnahmevorrichtung für die Meßprobe oder der Probenkörper sowie der Detektoreinlaß zueinander lagefixiert. Die im erfindungsgemäßen Verfahren eingesetze Meßvorrichtung kommt demgemäß vorteilhafterweise völlig ohne bewegliche Komponenten aus und unterscheidet sich in dieser Ausgestaltung beispielsweise von einer herkömmlichen Meßvorrichtung mit einem Goniometer. Auf diese Weise gelingt eine konstruktiv einfache, gleichwohl kompakte, zuverlässige und robuste Bauweise, die dauerhaft einen störungsfreien Betrieb gewährleistet.

Die Strahlungsquellen sind bevorzugt gleich beabstandet von der Aufnahmevorrichtung bzw. dem Ort der Meßprobe entfernt. Besonders bevorzugt liegen die Strahlungsquellen auf dem Umfang einer (imaginären) Kugel bzw. Halbkugel, eines Kreises oder Zylinders vor und sind auf den Mittelpunkt der Kugel, des Kreises oder Zylinders ausgerichtet, in den die Meßprobe bevorzugt zu positionieren ist. Besonders bevorzugt wird auch der Detektoreinlaß auf dem Umfang einer solchen Halbkugel bzw. Kugel bzw. eines solchen Kreises angeordnet. Die Strahlungsquellen, insbesondere auch zusammen mit dem Detektor bzw. Detektoreinlaß liegen bevorzugt in einer Ebene vor.

Für die Strahlungsquellen kann auf herkömmliche Strahlungsquellen, mit denen sich ein mehrwellenlängen- oder ein kontinuierliches Spektrum erzeugen läßt, zurückgegriffen werden. Geeignet sind beispielsweise solche Strahlungsquellen, die elektromagnetische Strahlung im sichtbaren Bereich emittieren. Gemäß einer bevorzugten Ausführungsform stellen die Strahlungsquellen Leuchtdioden, insbesondere Weißlichtleuchtdioden dar. Grundsätzlich kommen als Strahlungsquellen im Sinne der vorliegenden Erfindung solche in Frage, die elektromagnetische Strahlung emittieren können, die von UV-Strahlung bis zur nahen Infrarot-Strahlung reicht. Hierbei reicht es selbstverständlich aus, wenn die Strahlungsquellen nur einen Teil des vorangehend genannten Strahlungsspektrurns abdecken.

Um zu gewährleisten, daß von einer Strahlungsquelle aus ein Strahlenbündel mit im wesentlichen parallelen Strahlen auf die zu vermessende Meßprobe auftrifft, wird z.B. eine geeignete Kollimatorlinse zwischen der Strahlungsquelle und der Meßprobe angeordnet. Zur Fokussierung des gestreuten Strahls auf den Detektoreinlaß kann auch zwischen der Meßprobe und diesem Detektoreinlaß eine Kollimatorlinse vorgesehen sein, wobei sich der Abstand von dem Detektoreinlaß nach deren Brennweite bestimmt. Die Strahlungsquellen der im erfindungsgemäßen Verfahren eingesetzten Meßvorrichtungen bzw. die auf die Meßprobe auftreffenden Strahlenbündel haben nicht notwendigerweise kohärente Strahlung zu erzeugen bzw. zu umfassen, damit sich die Größe, Größenverteilung und/oder Konzentration von nanoskopischen Partikeln in Meßproben bestimmen lassen. Das Erzeugen von parallelen Strahlen reicht für die im erfindungsgemäßen Verfahren eingesetzte Vorrichtung bereits aus.

Gemäß einer weiteren Ausführungsform kann eine Strahlungsquelle, insbesondere sämtliche Strahlungsquellen, auch über einen Strahlungsemissionsleiter, z.B. ein Lichtfaserkabel, realisiert werden.

Des weiteren kann vorgesehen sein, daß der Detektor einen Mehrwellenlängendetektor darstellt, insbesondere ein Gitterspektrometer mit Diodenarray- oder CCD-Detektion. Der Detektor der im erfindungsgemäßen Verfahren eingesetzten Meßvorrichtung ist geeignet, eine Vielzahl an zeitlich aufeinander folgenden unterschiedlichen gestreuten Signalen bzw. Streulichtsignalen aufzunehmen. Diese Signale lassen sich sodann in der Auswerteeinheit wellenlängen- und intensitätsabhängig, insbesondere unter Berücksichtigung ihrer zeitlichen Abfolge, analysieren und speichern. Der Detektoreinlaß kann in einer Ausführungsform integraler Bestandteil des Detektors sein. In diesem Fall trifft die gestreute Strahlung unmittelbar auf den Detektor selber auf. Alternativ kann der Detektoreinlaß mit dem Detektor z.B. über mindestens einen Strahlungsrezeptionsleiter, beispielsweise in Form eines Lichtfaserleiters, verbunden oder verbindbar sein.

Die im erfindungsgemäßen Verfahren eingesetzte Meßvorrichtung ist vorzugsweise derart ausgelegt, daß die Strahlungsquellen sukzessive an- und ausschaltbar sind. Die Strahlungsquellen werden demgemäß bevorzugt nacheinander aktiviert, so daß vorzugsweise stets nur Strahlung einer einzigen Strahlungsquelle zu einem bestimmten Zeitpunkt auf die Meßprobe auftrifft. Das Strahlungsmuster sowie die Anfangsintensitäten der einzelnen Strahlungsquellen liegen entweder in der Auswerteeinheit vor oder werden an diese zeitnah für die Verwendung in einem Auswertealgorithmus übermittelt.

Hierbei ist eine solche Ausführungsform besonders bevorzugt, bei der die wellenlängen- und streuwinkelabhängigen Intensitäten der an einer Meßprobe gestreuten Strahlung zeitaufgelöst detektierbar sind.

Die Strahlenbündel einander benachbarter Strahlungsquellen schließen vorzugsweise einen Winkel im Bereich von etwa 20 bis 40° ein.

Hinreichend erschöpfende Resultate im Hinblick auf die zuverlässige Bestimmung der Größe, Größenverteilung und/oder Konzentration von beispielsweise Partikeln in Meßproben stellen sich insbesondere dann ein, wenn mit mindestens vier, insbesondere wenn mit mindestens fünf Strahlungsquellen gearbeitet wird. Hierbei ist von Vorteil, wenn die Strahlungsintensitäten der Strahlungsquellen individuell einstellbar sind. Zufriedenstellende Meßresultate lassen sich allerdings mit der im erfindungsgemäßen Verfahren eingesetzten Meßvorrichtung ohne weiteres auch mit nur zwei Strahlungsquellen erzielen.

Die Güte der im erfindungsgemäßen Verfahren eingesetzte Meßvorrichtung läßt sich beispielsweise auch noch dadurch erhöhen, daß die Strahlungsintensität einer Strahlungsquelle innerhalb eines Meßzyklus variierbar ist. Wird eine Strahlungsquelle innerhalb eines Meßzyklus beispielsweise zweimal aktiviert, d.h. zweimal ein- und ausgeschaltet, kann die Intensität der bei diesen beiden Strahlungsvorgängen ausgestrahlten Strahlung unterschiedlich sein.

Mit der im erfindungsgemäßen Verfahren eingesetzten Meßvorrichtung lassen sich auf einfache und zuverlässige Weise die Größe, Größenverteilung und/oder die Konzentration von nanoskopischen Partikeln in einer Meßprobe, beispielsweise von viskoser, flüssiger oder gasförmiger Konsistenz, bestimmen. Unter nanoskopischen Partikel bzw. Partikeln im nanoskopischen Bereich sollen im Sinne der vorliegenden Erfindung solche Partikel verstanden werden, die eine Größe im Bereich von einem Nanometer bis zur Wellenlänge der verwendeten Strahlung aufweisen.

Die im erfindungsgemäßen Verfahren eingesetzte Meßvorrichtung eignet sich ferner insbesondere zur Bestimmung des Trübungsgrades von Flüssigkeiten, insbesondere von Prozeßflüssigkeiten, von Bier, Wein, Fruchtsäften, Hefeweizen oder auch von Abwässern, sowie von nanoskopische Partikel oder Hohlräume enthaltenden transparenten festen Meßproben. Generell lassen sich sämtliche fluiden Systeme vermessen, die mit nanoskopischen Partikeln bzw. Schwebeteilchen eintrübbar sind.

Ferner eignet sich die im erfindungsgemäßen Verfahren eingesetzte Meßvorrichtung zur Bestimmung des Rauhigkeitsgrades bzw. Glanzes von Oberflächen fester Probenkörper.

Mit Hilfe der im erfindungsgemäßen Verfahren eingesetzten Meßvorrichtung läßt sich beispielsweise auch die Größe, Größenverteilung und/oder Menge von Trägerstoffen von Arzneimitteln im Verlauf der Formulierung dieser Arzneimittel bestimmen. Dieser Aspekt ist von nicht geringer Bedeutung, insoweit die Größe und Größenverteilung von bei der Arzneimittelformulierung üblicherweise zum Einsatz kommenden Trägerstoffen für die Wirksamkeit und die Abgabegeschwindigkeit dieser Arzneimittel im Organismus wesentlich sind. Kommt es beispielsweise bei der Formulierung von Arzneimittel zur Agglomeration der Trägerstoffe, geht damit in der Regel eine verringerte Wirksamkeit der angestrebten Applikationsform des Medikaments einher. Die erfindungsgemäße Meßvorrichtung gewährleistet erstmals eine einfache, kostengünstige und zuverlässige Kontrolle des Verhaltens von Trägerstoffen bei der Formulierung von Arzneimitteln.

Ferner eignet sich die im erfindungsgemäßen Verfahren eingesetzte Meßvorrichtung zur Prozeßkontrolle bei der Herstellung von Emulsionen, Suspensionen oder Lösungen.

Die im erfindungsgemäßen Verfahren eingesetzte Meßvorrichtung kann darüber hinaus als Fluorimeter, insbesondere als Mikrofluorimeter, eingesetzt werden.

Von Vorteil ist insbesondere, daß die im erfindungsgemäßen Verfahren eingesetzte Meßvorrichtung die zeitaufgelöste Bestimmung der Größe, Größenverteilung und/oder Menge bzw. Konzentration von Partikeln in einer Meßprobe gestattet.

Ein zur Erfindung verwandtes Verfahren ist die Bestimmung der Größe, Größenverteilung und/oder Konzentration von Partikeln oder Hohlräumen im nanoskopischen Bereich in einer festen transparenten oder viskosen oder flüssigen oder gasförmigen Meßprobe, des Trübungsgrades solcher Meßproben oder des Rauhigkeitsgrades von festen Oberflächen nichttransparenter Meßproben, umfassend die Schritte
a) Zurverfügungstellung einer im erfindungsgemäßen Verfahren eingesetzen Meßvorrichtung,
b) Zurverfügungstellung einer zu vermessenden Meßprobe in der Aufnahmevorrichtung für die Meßprobe,
c) insbesondere sukzessives, Bestrahlen der Meßprobe mit mindestens zwei Strahlungsquellen, umfassend Strahlung eines Mehrwellenlängen- oder eines kontinuierlichen Spektrums, mit Strahlenbündeln von im wesentlichen parallelen Strahlen,
d) Detektieren der unter einem bestimmten Winkel an der Meßprobe gestreuten Strahlung mit einem Dektektor, umfassend einen Detektoreinlaß, und
e) wellenlängen- und winkelabhängiges Auswerten der detektierten Signalintensitäten der gestreuten Strahlung in einer Auswerteeinheit zur Bestimmung der Größe, Größenverteilung und/oder Konzentration der in der Meßprobe vorliegenden nanoskopischen Partikel oder des Rauhigkeitsgrades von festen Oberflächen.

Gemäß einer besonders bevorzugten Ausgestaltung des verwandten Verfahrens ist vorgesehen, daß mindestens zwei, insbesondere eine Vielzahl an, wellenlängen- und winkelabhängige Intensitäten der gestreuten Strahlung von mindestens zwei für einen Meßvorgang lagefixierten Strahlungsquellen nacheinander, insbesondere in kurzen Zeitintervallen, aufgenommen werden, so daß eine zeitaufgelöste Messung der gestreuten Strahlung durchführbar ist. Eine Vielzahl an wellenlängen- und winkelabhängigen Intensitäten im Sinne der vorliegenden Erfindung werden beispielsweise dadurch erhalten, daß man bei Verwendung von mindestens zwei, insbesondere mindestens vier oder fünf, Strahlungsquellen die Intensitäten von mindestens zehn Wellenlängen erfaßt. Im allgemeinen sind winkelabhängige Intensitätsmessungen unter Verwendung von mindestens zwei, insbesondere mindestens vier oder fünf Strahlungsquellen für etwa zehn bis 256 Wellenlängen ausreichend, um die gewünschten Aussagen über die Größe, Verteilung bzw. Konzentration von nanoskopischen Partikeln oder Hohlräumen in Meßproben machen zu können. Selbstverständlich sind auch zeitaufgelöste Messungen möglich, bei denen die Intensitäten von mehr als 256 Wellenlängen streuwinkelabhängig vermessen werden. Grundsätzlich kann für das Verfahren gemäß der vorliegenden Erfindung für einen Meßzyklus auf bis zu etwa 4000 Wellenlängenmeßpunkte zurückgegriffen werden. Das verwandte Verfahren gestattet somit die für eine Meßprobe zu einer gegebenen Zeit charakteristische 3-Wertematrix bestehend aus Wertepunkten der Parameter Streuwinkel/Wellenlänge/Intensität.

Somit ist es möglich, in der Auswerteeinheit eine Vielzahl zeitlich aufeinanderfolgender Signale bzw. Signalmuster aufzunehmen und zu speichern und insbesondere unter Berücksichtigung dieser zeitlichen Abfolge zu analysieren. Kurze Zeitintervalle im Sinne der vorliegenden Erfindung umfassen beispielsweise Abstände im Bereich von Mikro- oder Millisekunden bis Sekunden. Folglich können eine Vielzahl an Signalen jeweils im Abstand von Mikro- oder Millisekunden bis Sekunden aufgenommen werden. Die Abstände zwischen den einzelnen Messungen können innerhalb einer Meßreihe variieren oder konstant gehalten werden. Die Abstände zwischen aufeinander folgenden winkel- und wellenlängenabhängigen Intensitätsmessungen der Streustrahlung können somit derart kurz gewählt werden, daß ohne weiteres Veränderungen der Partikel, z.B. der Größe, Verteilung oder Konzentration, über die Zeit verfolgbar sind. Beispielsweise kann alle zehn Millisekunden eine winkel- und wellenlängenabhängige Intensitätsmessung von an der Meßprobe gestreuter Strahlung vorgenommen werden. Vorteilhafterweise werden die wellenlängenabhängigen Intensitäten unter unterschiedlichen Streuwinkeln nacheinander aufgenommen. Hierfür schaltet man beispielsweise unterschiedliche Strahlungsquellen nacheinander an und wieder aus. Die Strahlungsquellen, vorzugsweise, jedoch nicht notwendigerweise, jeweils einander benachbarte Strahlungsquellen, werden hierbei sukzessive abgefahren, so daß jeder Strahlung einer bestimmten Strahlungsquelle aufgrund der Position derselben relativ zur Meßprobe ein bestimmter Streuwinkel zuordbar ist. Auch ist die Intensität der Ausgangsstrahlung einer Strahlungsquelle bekannt bzw. bestimmbar. Eine zeitaufgelöste Messung kann man folglich dadurch erhalten, daß man streuwinkelabhängig die wellenlängenabhängige Intensität in kürzeren Abständen, d.h. schneller detektiert bzw. verfolgt als die Veränderung der detektierten Partikel vor sich geht.

Das verwandte Verfahren nutzt insbesondere den Umstand, daß sich die Strahlungsquellen der Meßvorrichtung sukzessive nach einem vorgegebenen Muster ein- und ausschalten lassen. Bevorzugt werden benachbarte Strahlungsquellen jeweils nacheinander ein- und ausgeschaltet. Grundsätzlich ist jedoch die Abfolge der Ein- und Ausschaltvorgänge für die in einer Meßvorrichtung vorliegenden Strahlungsquellen frei wählbar, z.B. auch vollständig oder partiell wiederholbar und demgemäß auf das jeweilige Analyseproblem optimal abstimmbar.

Demgemäß ist von besonderem Vorteil, wenn mindestens zwei, insbesondere benachbarte, Strahlungsquellen gleichzeitig oder jeweils nacheinander ein- und ausgeschaltet werden. Eine Weiterentwicklung zeichnet sich ferner dadurch aus, daß mindestens eine Strahlungsquelle pulsweise ein- und ausgeschaltet wird und daß mindestens eine weitere Strahlungsquelle, insbesondere alle übrigen Strahlungsquellen, während des Meßvorgangs kontinuierlich strahlen. Von besonderem Vorteil ist hierbei eine Vorgehensweise, bei der mindestens zwei, insbesondere sämtliche, Strahlungsquellen synchron oder asynchron pulsweise ein- und ausgeschaltet werden.

Als besonders wirksam hat sich erwiesen, für die Auswertung nur solche gestreuten Signale bzw. Streulichtsignale heranzuziehen, die erhalten werden, wenn nur eine Strahlungsquelle eingeschaltet ist. Streusignale bzw. Streulichtsignale, die während sich überlappender Ein- und Ausschaltvorgänge zweier oder mehrerer Strahlungsquellen erhalten werden, sind für die Bestimmung der Größe, Größenverteilung und/oder Menge von Partikeln in einer Meßprobe bzw. der Rauhigkeit der Oberfläche eines festen Probenkörpers vorzugsweise zu vemachlässigen. Demgemäß bestrahlt man die Meßprobe bei diesem Modus nicht gleichzeitig mit zwei oder mehreren Strahlungsquellen, um so optimale auswertbare gestreute Signale bzw. Streulichtsignale sicherzustellen.

Mit dem vorangehend beschriebenen verwandten Verfahren sowie mit der im erfindungsgemäßen Verfahren eingesetzten Meßvorrichtung lassen sich somit wellenlängen- und winkelabhängige Intensitäten von an einer Meßprobe gestreuter Strahlung aufnehmen, speichern und auswerten. Hierbei kann z.B. mit Hilfe bekannter Streutheorien für Partikel wie Mie-Streuung, Rayleigh-Streuung oder Ralyeigh-Gans-Debye-Streuung unter anderem eine Anpassung der Parameter dieser Streutheorien wie dem Radius der streuenden Partikel oder ihrer Brechzahl über Least-square-Verfahren vorgenommen werden. Gemäß einer Ausführungsform kann im Rahmen einer qualitativen bzw. semiquantitativen Auswertung die wellenlängen- und winkelabhängige Intensität gestreuter Strahlung aufgenommen und sodann als Funktion dieser zwei Variablen in Form eines Kennlinienfeldes gespeichert werden. Hieran kann sich über Meßproben mit bekannter Konzentration und Partikelgröße eine absolute Kalibrierung anschließen. Schließlich kann eine Gradientenanalyse zur Bestimmung der Veränderung der Streuzentrendichte und -größe benutzt werden. Das Kennlinienfeld stellt hierbei eine stetige und eindeutige Funktion zweier Variablen dar.

In der Chirurgie, beispielsweise der Herzchirurgie oder auch bei anderen chirurgischen Eingriffen wie Transplantationen wird die Blutgerinnung während des Eingriffs mit Hilfe von intravenös appliziertem Heparin stark herabgesetzt, so daß im Organismus sogenanntes heparinisiertes Blut vorliegt. Hierfür wird in der Regel unfraktioniertes hochmolekulares Heparin verwendet. Die Dosierung des Heparins erfolgt im allgemeinen empirisch nach dem Körpergewicht des Patienten (ca. 1,5 bis 1,8 mm/kg). Die auf diese Weise ermittelten Heparinmengen stellen im allgemeinen nicht eine an die individuellen Gegebenheiten optimal angepaßte Heparingabe dar.

Gegenwärtig wird daher die im Blut vorhandene Menge an Heparin während der Operation mit Hilfe sogenannter ACT-Tests (activated clotting time) überprüft. Ein solches Verfahren findet sich z.B. in der EP 1 221 620 A1 beschrieben. Hierbei wird durch Gabe geeigneter Antikoagulantien, beispielsweise Faktor Xₐ, die Zeitdauer bis zur Gerinnung des Blutes festgestellt. Dieses Verfahren erfordert relativ große Mengen an Blutproben, ist noch stets relativ ungenau und zudem sehr zeitintensiv. Nach Abschluß einer Operation, beispielsweise einer Bypaßoperation, ist das noch wirksame applizierte Heparin zu neutralisieren, was üblicherweise durch Protamingaben geschieht. Ist diese Heparinmenge fehlerhaft oder zu ungenau bestimmt worden, kann es Probleme im Zusammenhang mit der Dosierung einer geeigneten Protaminmenge geben. Beispielsweise sind bei einer Protamin-Unterdosierung innere Blutungen nicht ausgeschlossen, während bei einer Protamin-Überdosierung mit postoperativen Koagulationen zu rechnen ist.

Gemäß der vorliegenden Erfindung wird daher ein Verfahren zur Bestimmung des Heparinanteils in, insbesondere heparinisierten, Blut- oder Blutserumproben zur Verfügung gestellt, umfassend die Schritte:
a) Zurverfügungstellung einer Meßvorrichtung,
b) Zurverfügungstellung einer, insbesondere heparinisierten, Blut- oder Blutserumprobe in der Aufnahmevorrichtung für die Meßprobe, welche bereits mit mindestens einem Heparin-Antagonisten versetzt ist und/oder welche, wenn in der Aufnahmevorrichtung vorliegend, mit mindestens einem Heparin-Antagonisten unter Ausbildung eines Antagonist/Heparin-Komplexes versetzt wird,
c) insbesondere sukzessives, Bestrahlen mit mindestens zwei Strahlungsquellen, umfassend Strahlung eines Mehrwellenlängen- oder eines kontinuierlichen Spektrums, mit Strahlenbündeln von im wesentlichen parallelen Strahlen,
d) Detektieren der unter einem bestimmten Winkel an der Meßprobe gestreuten Strahlung mit einem Dektektor, umfassend einen Detektoreinlaß, und
e) wellenlängen- und winkelabhängiges Auswerten der detektierten Signalintensitäten in einer Auswerteeinheit zur Bestimmung der Konzentration des in der Meßprobe vorliegenden Antagonist/Heparin-Komplexes.

Die mindestens zwei jeweils beabstandet voneinander und beabstandet von der Meßprobe vorliegenden Strahlungsquellen sind vorzugsweise lagefixiert. Hierbei wird im allgemeinen die Strahlungsquelle während der Messung in ihrer Lage relativ zu einer benachbarten Strahlungsquelle bzw. zu benachbarten Strahlungsquellen sowie zu der Meßprobe nicht verändert. Die Heparinbestimmung gestaltet sich besonders vorteilhaft, wenn mindestens zwei, insbesondere benachbarte, Strahlungsquellen gleichzeitig oder jeweils nacheinander ein- und ausgeschaltet werden. Dabei kann insbesondere vorgesehen sein, daß die Strahlungsquellen sukzessive nach einem vorgegebenen Muster ein- und ausgeschaltet werden. Eine Weiterbildung dieses Verfahrens sieht ferner vor, daß mindestens eine Strahlungsquelle pulsweise ein- und ausgeschaltet wird und daß mindestens eine weitere Strahlungsquelle, insbesondere alle übrigen Strahlungsquellen, während des Meßvorgangs kontinuierlich strahlen. Von Vorteil ist hierbei gemäß einer weiteren Ausgestaltung ferner, daß mindestens zwei, insbesondere sämtliche, Strahlungsquellen synchron oder asynchron pulsweise ein- und ausgeschaltet werden. Hiebei ist von besonderem Vorteil, wenn für die Auswertung nur solche Streulichtsignale herangezogen werden, die erhalten werden, wenn nur eine Strahlungsquelle eingeschaltet ist. Eine bevorzugte Verfahrensvariante zeichnet sich schließlich dadurch aus, daß zwei oder mehr Strahlungsquellen nicht gleichzeitig die Meßprobe bestrahlen, um auswertbare Streulichtsignale zu erhalten.

Gemäß einer besonders bevorzugten Ausgestaltung des erfindungsgemäßen Verfahrens ist vorgesehen, daß mindestens zwei, insbesondere eine Vielzahl an, wellenlängen- und winkelabhängige Intensitäten der gestreuten Strahlung von einer oder mindestens zwei Strahlungsquellen nacheinander, insbesondere in kurzen Zeitintervallen, aufgenommen werden, so daß eine zeitaufgelöste Messung der gestreuten Strahlung durchführbar ist. Die zuvor zu der zeitaufgelösten Messung gemachten Angaben gelten hier entsprechend.

Mit dem erfindungsgemäßen Verfahren zur Bestimmung des Heparinanteils in beispielsweise heparinisierten Blut- oder Blutserumproben wird eine schnelle und präzise Methode zur Bestimmung des Heparinspiegels zur Verfügung gestellt. Insbesondere Patienten mit erhöhter Heparinempfindlichkeit können sehr exakt eingestellt werden.

Als Antagonist kommt bevorzugt ein basisches Protein, insbesondere Protamin zum Einsatz. Als besonders vorteilhaft hat es sich erwiesen, den Antagonisten, bezogen auf die Menge an in der Meßprobe vorliegendem Heparin, im Überschuß zuzugeben. Mit diesem Verfahren läßt sich der Heparingehalt über die, insbesondere zeitaufgelöste, Bestimmung der Trübung der Blutprobe bzw. Blutserumprobe exakt ermitteln.

Weitere Details und Vorteile der vorliegenden Erfindung werden anhand der nachfolgend genannten Abbildungen näher beschrieben. Darin zeigen
- Figur 1: eine schematische Darstellung einer im erfindungsgemäßen Verfahren eingesetzten Meßvorrichtung; und
- Figur 2: eine schematische Darstellung einer verwandten Ausführungsform einer im erfindungsgemäßen Verfahren eingesetzten Meßvorrichtung.

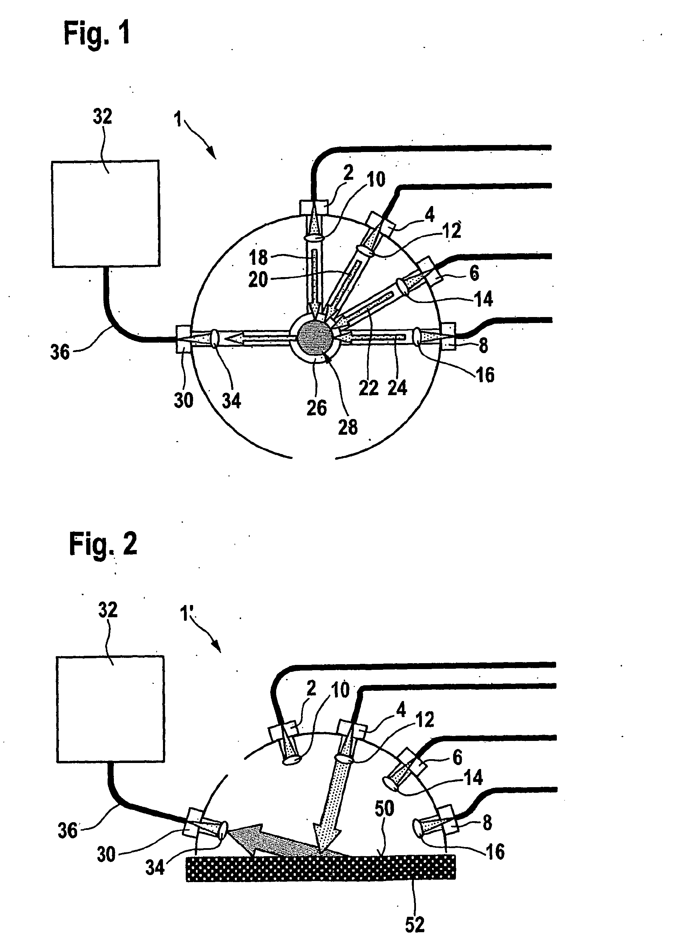

Figur 1 ist eine Meßvorrichtung 1 zu entnehmen, die vier beabstandet voneinander angeordnete Strahlungsquellen 2, 4, 6 und 8 umfaßt, welche jeweils ein Mehrwellenlängenspektrum, insbesondere ein kontinuierliches Spektrum ausstrahlen. Bei der dargestellten Ausführungsform liegen die Strahlungsquellen 2, 4, 6 und 8 sowie die Aufnahmeeinheit in einer Ebene und sind entlang eines Kreisumfangs angeordnet. Im Bereich des Kreismittelpunkts ist die Probenaufnahmevorrichtung 26 angebracht. Sender- und Empfängerstrahlungswege verlaufen radial in Bezug auf diesen Kreis. Um parallele bzw. nahezu parallele Strahlen zu erhalten, ist jeder Strahlungs- bzw. Lichtquelle eine Kollimatorlinse 10, 12, 14 und 16 nachgeschaltet. Die erzeugten parallelen Strahlen 18, 20, 22 und 24 sind sämtlichst auf eine im Mittelpunkt des (imaginären) Kreises angeordnete, in einer Meßküvette 26 vorliegende Probe 28 gerichtet. Die Probe 28 kann beispielsweise trübes Hefeweizenbier oder Schwebeteilchen enthaltendes Abwasser darstellen. Die Strahlungsquellen 2, 4, 6 und 8 wie auch die Aufnahmeeinheit 30 sind ebenso wie die Probenaufnahmevorrichtung 26 zueinander unbewegbar angeordnet. Die parallelen Lichtstrahlen benachbarter Strahlungsquellen schließen einen konstanten Winkel ein. Im vorliegenden Fall beträgt der Winkel zwischen benachbarten Strahlenbündeln jeweils 30°. Bezogen auf die durch den Detektor 30 und den Probenaufnahmeraum 26 verlaufende Achse stehen die jeweiligen Strahlenbündel demgemäß in einem Winkel von 0°, 30°, 60° bzw. 90°. Über die Kollimatorlinse 34 wird die in Richtung auf die Aufnahmeeinheit 30 gestreute Strahlung in einen Lichtleiter 36 eingekoppelt und einem Detektor 32 zugeführt. Hierbei kann es sich beispielsweise um einen CCD-Detektor handeln, der die Intensität der einfallenden gestreuten Strahlung wellenlängenabhängig detektiert.

Die in dem Probenaufnahmeraum 26 in der Meßprobe vorliegenden Partikel werden gemäß einer Ausführungsform in der Art vermessen, daß die Strahlungsquellen 2, 4, 6 und 8 nacheinander ein- und ausgeschaltet werden. Auf diese Weise kann man in nur wenigen Sekunden Meßzeit durch Kombination unterschiedlicher Winkel einen Datensatz an wellenlängen- und winkelabhängigen Intensitäten erhalten, der das Streuverhalten der zu analysierenden Partikel repräsentiert, und zwar unter Verwendung des gesamten Emissionsspektrums der einzelnen Strahler. Bei diesen Strahlern kann es sich z.B. um Weißlichtleuchtdioden handeln. Auf diese Weise gelingt eine zeitaufgelöste Bestimmung der Intensität der gestreuten Strahlung in Abhängigkeit vom Streuwinkel und der Wellenlänge unter Verwendung des gesamten Emissionsspektrums eines Strahlers. Der erhaltene Datensatz läßt sich ohne weiteres auch auf eine z.B. durch analytische Ultrazentrifugation bestimmte, absolute Partikelgröße normieren.

Figur 2 gibt eine verwandte Ausführungsform einer im erfindungsgemäßen Verfahren eingesetzten Meßvorrichtung 1' wieder. Anders als bei der Meßvorrichtung gemäß Figur 1 wird bei der vorliegenden Meßvorrichtung nicht eine in einem Probenaufhahmeraum vorliegenden Meßflüssigkeit, sondern die Oberfläche 50 eines festen Probenkörpers 52 vermessen. Wie bei der Vorrichtung gemäß Figur 1 sind die Strahlungsquellen 2, 4, 6 und 8 auf dem Umfang eines Kreises angeordnet und auf den Mittelpunkt dieses Kreises gerichtet, wo sich zumindest ein Ausschnitt der zu vermessenden Oberfläche 50 des Probenkörpers 52 befindet. Wiederum wird über den Einsatz von Kollimatoren 10, 12, 14 und 16 sichergestellt, daß im wesentlichen parallele Strahlung auf die Probenoberfläche 50 auftrifft. Auch die Detektoreinheit 30 verfügt über einen Kollimator 34 und ist ebenfalls auf dem Umfang des genannten Kreises angeordnet. Die Strahlungsquellen 2, 4, 6 und 8 sind in der Weise angeordnet, daß die von diesen ausgehenden Strahlenbündel einen Winkel von 120, 190, 60 bzw. 30° mit der Probenoberfläche einschließen. Die Detektionseinheit 30 ist in der Weise auf dem Umfang des (imaginären) Kreises angeordnet, daß gestreute Strahlung aufgenommen wird, die im Mittelpunkt des Kreises in einem Winkel von 30° bezogen auf die Probenoberfläche gestreut wird. Die Detektion und Auswertung erfolgt im wesentlichen wie bei der Meßvorrichtung gemäß Figur 1. Mit der in Figur 2 beschriebenen Meßvorrichtung läßt sich ohne weiteres die Oberflächenrauhigkeit, Färbung oder der Glanz von Probenoberflächen bestimmen.

## Patentansprüche

1. Verfahren zur Bestimmung des Heparinanteils in Blut- oder in Blutserumproben, umfassend die
a) Zurverfügungstellung einer Meßvorrichtung (1) umfassend eine Aufnahmevorrichtung (26) für eine zu vermessende Meßprobe (28), einen Detektor (32), umfassend mindestens einen Detektoreinlaß, eine Auswerteeinheit und mindestens zwei jeweils beabstandet voneinander und beabstandet von der Meßprobe vorliegende Strahlungsquellen (2, 4, 6, 8), die ein Mehrwellenlängenspektrum oder ein kontinuierliches Spektrum aufweisen und deren Strahlungsintensitäten einstellbar und/oder bestimmbar sind, wobei über die Strahlungsquellen (2, 4, 6, 8) jeweils ein Strahlenbündel (18, 20, 22, 24) an im wesentlichen parallelen Strahlen in Richtung auf eine Meßprobe (28) emittierbar ist und wobei die auf die Meßprobe (28) richtbaren Strahlenbündel (18, 20, 22, 24) unterschiedlicher Strahlungsquellen (2, 4, 6, 8), bezogen auf die Achse zwischen dem Dektektoreinlaß (30) und der Meßprobe (28) in unterschiedlichen Winkeln auf die Meßprobe (28) ausgerichtet oder ausrichtbar sind,
b) die Zurverfügungstellung einer Blut- oder Blutserumprobe (28) in der Aufnahmevorrichtung (26) für die Meßprobe, welche bereits mit mindestens einem Heparin-Antagonisten versetzt ist und/oder welche, wenn in der Aufnahmevorrichtung (26) vorliegend, mit mindestens einem Heparin-Antagonisten unter Ausbildung eines Antagonist/Heparin-Komplexes versetzt wird,
c) insbesondere sukzessives, Bestrahlen der Meßprobe (28) mit mindestens zwei Strahlungsquellen (2, 4, 6, 8), umfassend Strahlung eines Mehrwellenlängen- oder eines kontinuierlichen Spektrums, mit Strahlenbündeln (18, 20, 22, 24) von im wesentlichen parallelen Strahlen,
d) Detektieren der unter einem bestimmten Winkel an der Meßprobe (28) gestreuten Strahlung mit dem Dektektor (32), und
e) wellenlängen- und winkelabhängiges Auswerten der detektierten Signalintensitäten in der Auswerteeinheit zur Bestimmung der Konzentration des in der Meßprobe (28) vorliegenden Antagonist/Heparin-Komplexes.

2. Verfahren nach Anspruch 1, **dadurch gekennzeichnet, daß** der Antagonist ein basisches Protein, insbesondere Protamin, umfaßt.

3. Verfahren nach Anspruch 1 oder 2, **dadurch gekennzeichnet, daß** der Antagonist, bezogen auf die Menge an in der Meßprobe (28) vorliegendem Heparin, im Überschuß zugegeben wird.

4. Verfahren nach einem der Ansprüche 1 bis 3, **dadurch gekennzeichnet, daß** der Heparingehalt über die, insbesondere zeitaufgelöste, Bestimmung der Trübung der Blutprobe bzw. Blutserumprobe ermittelt wird.

5. Verfahren nach einem der Ansprüche 1 bis 4, **dadurch gekennzeichnet, daß** mindestens eine Strahlungsquelle (2, 4, ,6, 8) pulsweise ein- und ausgeschaltet wird und daß mindestens eine weitere Strahlungsquelle (2, 4, 6, 8), insbesondere alle übrigen Strahlungsquellen (2, 4, 6, 8), während des Meßvorgangs kontinuierlich strahlen.

6. Verfahren nach einem der Ansprüche 1 bis 5, **dadurch gekennzeichnet, daß** für die Auswertung nur solche gestreuten Strahlungssignale herangezogen werden, die erhalten werden, wenn nur eine Strahlungsquelle (2, 4, 6, 8) eingeschaltet ist.

7. Verfahren nach einem der Ansprüche 1 bis 6, **dadurch gekennzeichnet, daß** mindestens zwei, insbesondere eine Vielzahl an, wellenlängen- und winkelabhängige Intensitäten der gestreuten Strahlung von einer oder mindestens zwei Strahlungsquellen (2, 4, 6, 8) nacheinander, insbesondere in kurzen Zeitintervallen, aufgenommen werden, so daß eine zeitaufgelöste Messung der gestreuten Strahlung durchführbar ist.

## Claims

1. A method to determine the heparin share in blood samples or blood serum samples, comprising
a) the provision of a measuring device (1), comprising a retaining device (26) for a measuring sample (28) to be measured, a detector (32), comprising at least one detector inlet, an evaluation unit and at least two radiation sources (2, 4, 6, 8) which are respectively arranged at a distance from each other, and at a distance from the measuring sample, which comprise a multiple wavelength spectrum or a continuous spectrum, and the radiation intensities of which can be adjusted and/or determined, wherein via the radiation sources (2, 4, 6, 8), in each case one ray bundle (18, 20, 22, 24) can be emitted in essentially parallel rays in the direction of a measuring sample (28), and wherein the ray bundles (18, 20, 22, 24) from different radiation sources (2, 4, 6, 8) which can be directed onto the measuring sample (28) are aligned or can be aligned at different angles onto the measuring sample (28), in relation to the axis between the detector inlet (30) and the measuring sample (28),
b) the provision of a blood sample or blood serum sample (28) in the retaining device (26) for the measuring sample, which is already mixed with at least one heparin antagonist and/or which when present in the retaining device (26) is mixed with at least one heparin antagonist in order to form an antagonist/heparin complex,
c) in particular successive radiation of the measuring sample (28) with at least two radiation sources (2, 4, 6, 8), comprising the radiation of a multiple wavelength or of a continuous spectrum, with ray bundles (18, 20, 22, 24) of essentially parallel rays,
d) the detection of the radiation scattered at a particular angle on the measuring sample (28) using the detector (32), and
e) the wavelength and angle-dependent evaluation of the detected signal intensities of the scattered radiation in the evaluation unit in order to determine the concentration of the antagonist/heparin complex present in the measuring sample (28).

2. A method according to claim 1, **characterized in that** the antagonist comprises an alkaline protein, in particular protamine.

3. A method according to either of claims 1 or 2, **characterized in that**
the antagonist is added in excess in relation to the quantity of heparin present in the measuring sample (28).

4. A method according to any one of claims 1 to 3, **characterized in that**
the heparin content is determined via the in particular time-dispersed determination of the opacity of the blood sample or blood serum sample.

5. A method according to any one of claims 1 to 4, **characterized in that**
at least one radiation source (2, 4, 6, 8) is switched on and off in pulses, and that at least one further radiation source (2, 4, 6, 8), in particular all other radiation sources (2, 4, 6, 8), radiate continuously during the measuring procedure.

6. A method according to any one of claims 1 to 5, **characterized in that**
for the evaluation only those scattered radiation signals are used which are obtained when only one radiation source (2, 4, 6, 8) is switched on.

7. A method according to any one of claims 1 to 6, **characterized in that**
at least two, in particular a plurality of wavelength and angle-dependent intensities of the scattered radiation of one or at least two radiation sources (2, 4, 6, 8) are recorded one after the other, in particular at brief time intervals, so that a time-dispersed measurement of the scattered radiation can be conducted.

## Revendications

1. Procédé de détermination de la proportion d'héparine dans des échantillons de sang ou de sérum sanguin, comprenant
a) la mise à disposition d'un dispositif de mesure (1) comportant un dispositif d'admission (26) d'un échantillon de mesure (28) à évaluer, un détecteur (32), comportant au moins une entrée de détecteur, une unité d'évaluation et au moins deux sources de rayonnement (2, 4, 6, 8), respectivement espacées l'une de l'autre et placées devant l'échantillon avec un écart, sources qui présentent un spectre à plusieurs longueurs d'ondes ou un spectre continu et dont les intensités de rayonnement peuvent être réglées et/ou déterminées, où, respectivement un faisceau de rayonnement (18, 20, 22, 24) parmi les rayonnements dans l'ensemble parallèles peuvent être émis en direction d'un échantillon de mesure (28) par l'intermédiaire des sources de rayonnement (2, 4, 6, 8), et où les faisceaux de rayonnement (18, 20, 22, 24) de différentes sources de rayonnement (2, 4, 6, 8) sont orientés, ou peuvent être orientés, vers l'échantillon de mesure (28), sous divers angles par rapport à l'axe entre l'entrée du détecteur (30) et l'échantillon de mesure (28),
b) la mise à disposition d'un échantillon de sang ou de sérum sanguin (28) dans le dispositif d'admission (26) en tant qu'échantillon, qui a déjà été mis à réagir avec au moins un antagoniste d'héparine et/ou qui lorsqu'il est présent dans le dispositif d'admission (26), est mis à réagir avec au moins un antagoniste d'héparine avec la formation d'un complexe antagoniste/héparine,
c) en particulier, l'exposition successive de l'échantillon de mesure (28) à au moins deux sources de rayonnement (2, 4, 6, 8) comprenant un rayonnement à plusieurs longueurs d'ondes ou un spectre continu, avec des faisceaux de rayonnement (18, 20, 22, 24) de rayons dans l'ensemble parallèles,
d) la détection du rayonnement dispersé sur l'échantillon de mesure (28) sous un certain angle avec le détecteur (32), et
e) l'évaluation en fonction des longueurs d'ondes et en fonction des angles des intensités des signaux détectés dans l'unité d'évaluation pour la détermination de la concentration du complexe antagoniste/héparine présent dans l'échantillon de mesure (28).

2. Procédé selon la revendication 1 **caractérisé en ce que**
l'antagoniste comprend une protéine basique, en particulier de la protamine.

3. Procédé selon les revendications 1 ou 2 **caractérisé en ce que**
l'antagoniste est ajouté en excès par rapport à la quantité d'héparine présente dans l'échantillon de mesure (28).

4. Procédé selon l'une des revendications de 1 à 3 **caractérisé en ce que**
la quantité d'héparine est déterminée par l'intermédiaire de la détermination du trouble de l'échantillon de sang, respectivement de l'échantillon de sérum sanguin, en particulier solubilisé avec le temps.

5. Procédé selon l'une des revendications de 1 à 4 **caractérisé en ce**
**qu'**au moins une source de rayonnement est branchée ou débranchée par impulsions et qu'au moins une autre source de rayonnement (2, 4, 6, 8), en particulier, toutes les sources de rayonnement restantes (2, 4, 6, 8), émettent de manière continue pendant le processus de mesure.

6. Procédé selon l'une des revendications de 1 à 5 **caractérisé en ce que**,
pour la détermination, seuls sont considérés des signaux de rayonnement dispersés qui sont obtenus lorsqu'une seule source de rayonnement (2, 4, 6, 8) est branchée.

7. Procédé selon l'une des revendications de 1 à 6 **caractérisé en ce**
**qu'**au moins deux, en particulier un grand nombre, d'intensités fonctions des longueurs d'onde et des angles parmi les rayonnements dispersés d'une ou d'au moins deux sources de rayonnement (2, 4, 6, 8) sont enregistrées les unes après les autres, en particulier avec des intervalles de temps courts, de sorte qu'une mesure du rayonnement dispersé indépendante du temps peut être réalisée.
